# EUROPEAN PATENT SPECIFICATION

(11) **EP 1 180 223 B1**
(45) Date of publication and mention of the grant of the patent: **11.05.2005**
(21) Application number: 01901626.0
(22) Date of filing: 05.01.2001
(51) Int. Cl.: F16K 11/16

(54) **MIXING VALVE OF SINGLE LEVER TYPE ARRANGED TO FACILITATE TEMPORARY INCREASE OF THE OUTPUT FLOW**
EINHEBELMISCHVENTIL MIT TEMPORÄRER DURCHFLUSSERHÖHUNG
ROBINET MELANGEUR A LEVIER UNIQUE FACILITANT L'ACCROISSEMENT TEMPORAIRE DU DEBIT DE SORTIE

(30) Priority: 29.03.2000 SE 0001160
(43) Date of publication of application: 20.02.2002
(73) Proprietor: Mora Armatur Holding AB, 79227 Mora (SE)
(72) Inventor: HAIDER, Erik, S-792 32 Mora (SE); JUNGVIG, Sven-Erik, S-792 97 Mora (SE)
(74) Representative: Norén, Per Bo Arne
(86) International application number: PCT/SE2001/000019
(87) International publication number: WO 2001/077556

(56) References cited:
- EP-A2- 0 718 534
- SE-B- 449 782

## Description

### Technical field

The present invention relates to a mixing valve of single lever type for liquids, e.g. hot and cold water, and of the type comprising a valve housing, arranged having two individual inlets and a common outlet for the liquids, a manually operable control means arranged to influence a valve means, preferably of ceramic type, arranged in the valve housing, whereby both volume and temperature of the discharged flow can be controlled. According to the invention, a temporary increase of discharged flow is facilitated.

### Background of the invention

For example, SE, B, 449 782 discloses a previously known solution for accomplishing a temporary increase of the discharged flow, in which the control means for controlling flow volume and temperature of the liquid discharged through the outlet is arranged as a two-arm lever, the longer part comprising of a lever extending outside the valve housing and the shorter part comprising of a control means inside the valve housing, co-acting with a valve means. Said control means has a resilient tongue serving as an abutment member, co-acting with a contact surface, and said tongue, when in contact with the contact surface, is arranged to resiliently give away and to facilitate an increase of the outlet flow. The resilient contact with the contact surface facilitates a temporary increase of the discharged flow when the manually operable lever is made subject to an increased manual force, and the resilient tongue returns the lever, and thus reduces the discharged flow, when said force no longer exists.

A previously known alternative solution is disclosed in SE, T3, 0 667 941, in which the above mentioned resilient tongue is replaced by a springloaded screw, which in contact with the contact surface is arranged to resiliently give away due to a manually applied force to the control lever and thereby facilitate a temporary increase of the discharged flow. A substantially similar solution is also disclosed in SE, T3, 0 718 534.

In these previously known solutions utilized resilient means at the inner part of the control lever result in a requirement of space, which increases the size of the upper part of the valve housing, and thereby restricts the possibility of creating an aesthetically pleasant design. It is also desirable to reduce manufacturing costs for a mixing valve having the function of facilitating a temporary increase of discharged flow. Furthermore, previously known solutions do not facilitate possibility to modify existing mixing valves in a simple fashion in order to introduce the function temporary increase of discharged flow for same, since they require that the mixing valve, when manufactured, has been designed with the means required to accomplish intended function.

### Object of the invention

The object of the present invention is to disclose a device for a mixing valve facilitating a temporary increase of the discharged flow, which removes the above mentioned disadvantages, and which can be accomplished at a very low manufacturing cost. A further major object is to disclose a solution which in a simple way facilitates introduction of the desired function (temporary increase of the discharged flow) in substantially all types of mixing valves of single lever type having a ceramic valve unit, i.e. also already sold and installed mixing valves without said function.

The mixing valve according to the invention is of single lever type and intended for liquids, e.g. hot and cold water, and of the type comprising a valve housing, arranged with two individual inlets and a common outlet for the liquids, a manually operable control member arranged to influence a valve unit arranged in the valve housing, preferably of ceramic type and having a fixed valve disc and a in relation to same rotatably and linearly movably arranged valve disc, whereby both temperature and flow volume of discharged flow can be controlled, and it is mainly characterised in that a movement transferring member joined with the movably arranged valve disc is arranged with a springloaded abutment means extending in the direction of movement for said valve disc during a flow increasing movement, after a predetermined linear flow increasing movement arranged to take up contact with the internal surface of a surrounding tubular housing or a from a central member extending contact member, during a continued flow increasing opening movement arranged to exert a force aiming to return the movably arranged valve disc to a position in which the springloaded abutment means no longer exerts any return force due to contact with the tubular housing.

### Brief description of the drawings

A non-restricting example of an embodiment according to the invention is hereinafter described more in detail with reference to enclosed drawings, in which:
Fig. 1 is a side view, partly in cross-section, of a mixing valve of single lever type, including a ceramic valve unit;
Fig. 2 is a cross-sectional side view of an example of a known ceramic valve unit with included ceramic valve discs located in the position shown in Fig. 1;
Fig. 3 is a side view corresponding to Fig. 2, with the ceramic valve discs located in another end position;
Fig. 4 is a view of a ceramic valve unit of the type shown in Figs. 1 and 2, modified according to the present invention, and shown actuated to the position whereafter only a temporary increase of the discharged flow can be accomplished;
Fig. 5 is a view corresponding to Fig. 3, in which the ceramic valve unit is actuated to a position in which the discharged flow is temporarily increased to a maximum discharged flow;
Fig. 6 is a plan view of the part in the valve unit co-acting with control member of the valve unit in order to move the movably arranged ceramic valve disc, disclosing the side which is directed towards the ceramic valve disc;
Fig. 7 is a cross-sectional view at the line VII - VII in Fig. 6; and
Fig. 8 is a view corresponding to Fig. 4, intended to illustrate an alternative embodiment according to the present invention.

### Description of shown example of embodiment

Initially can be mentioned, that the ceramic valve units used for mixing valves of single lever type are in fact supplied by different manufacturers, but that a non-official standard can be regarded as existing with regard to this type of valve units, which means that function and outside measurements substantially correspond with regard to the various types that are marketed.

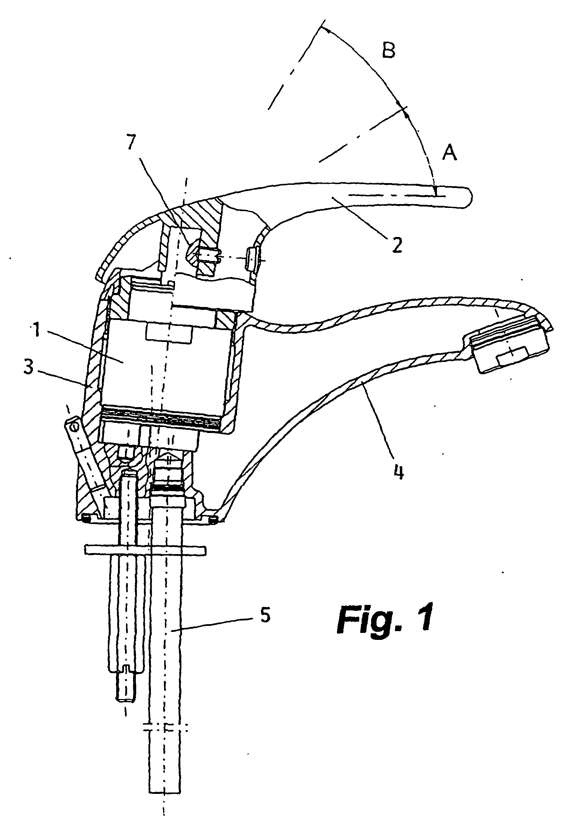

Fig 1 is only intended to serve as an example of a mixing valve having such a ceramic valve unit, as a complete unit denominated 1. The mixing valve comprises in known fashion a control member 2, a valve housing 3, an outlet member 4, and two inlet pipes 5 (whereof only one is shown, and the other is located behind the shown pipe 5).

A swinging movement of the control member 2 in direction upwards from the position shown in Fig. 1 results to a corresponding degree of a supply of water from the inlet pipes to the outlet member 4, whereas the mixing relationship is decided by a movement in a plane corresponding to the horizontal plane for the position shown in Fig. 1, i.e. a plane substantially perpendicular to the plane in which the flow rate is controlled.

Within a first flow rate determining area, denominated A, there is no surveillance of the discharged flow, but when this discharged flow is exceeded (area B), the increased discharged flow is only maintained as long as a manual force is applied to the control member 2, intended to maintain same within this area (B). As soon as this application of force ceases, the control member 2 returns, and thus also the discharged flow, to what is allowed within area A.

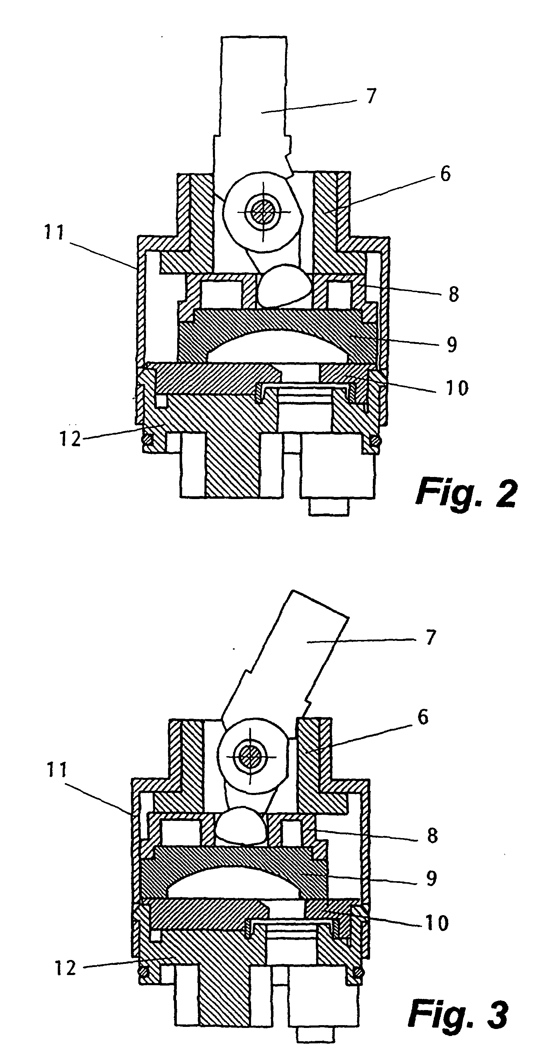

According to the present invention, the above described temporary increase of discharged flow is accomplished by a small modification of the previously mentioned valve unit 1. A typical example of such a unit is shown in Figs. 2 and 3 in unmodified form, i.e. without the modification according to the invention facilitating accomplishing of a temporary increase of the discharged flow.

The valve unit shown in Figs. 2 and 3 includes an upper member 6, in which a controlling member 7 is pivotally attached, the lower part of which extends into an aperture arranged in a transferring member 8, which embraces a movably arranged ceramic valve disc 9 in contact with a non-movably arranged valve disc 10. A substantially tubular housing 11 is arranged surrounding the valve unit 1, joined to a lower supporting member 12. Fig. 2 shows the valve unit 1 in a position corresponding to the position shown in Fig. 1, and Fig. 3 in a position facilitating maximum discharged flow.

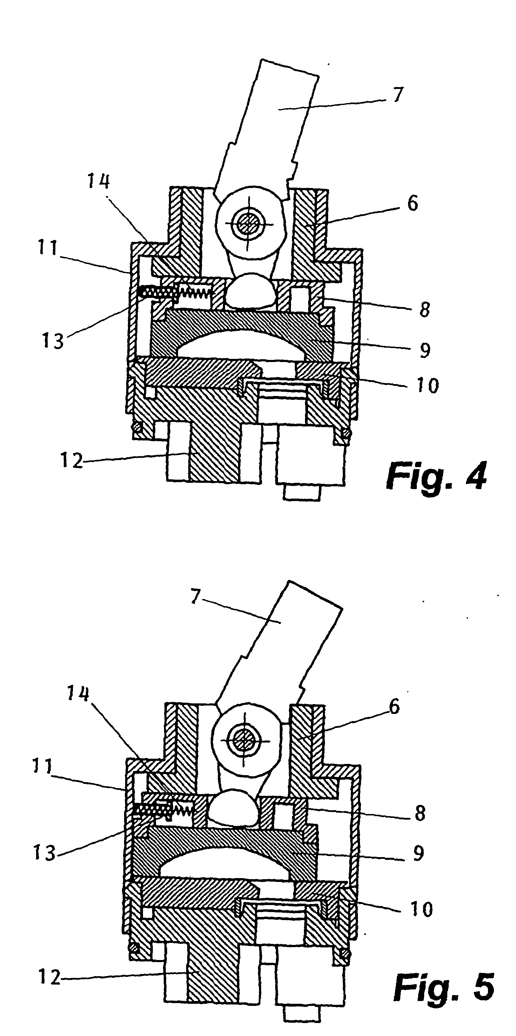

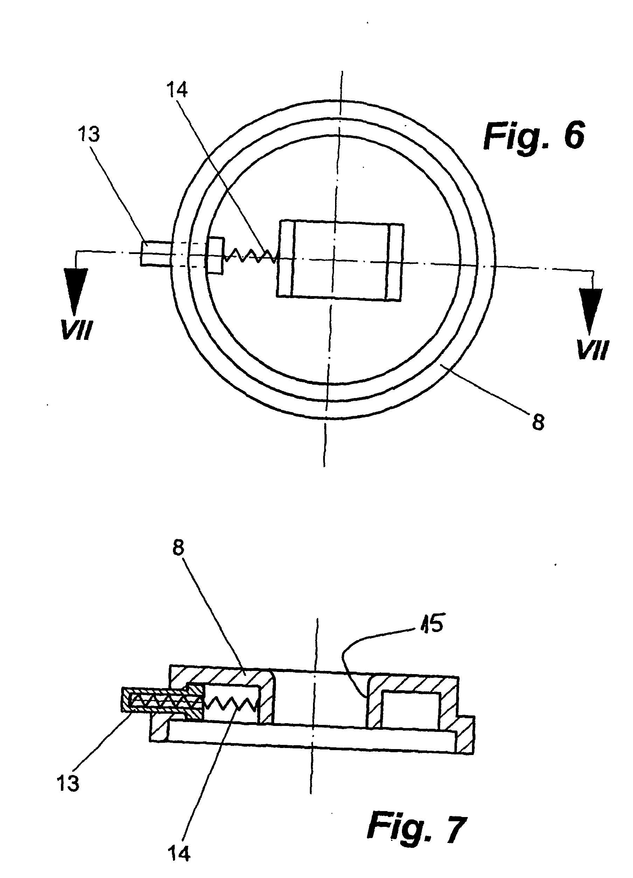

Figs. 4 and 5 show the valve unit according to Figs. 2 and 3 modified according to the present invention, and differs by a relatively simple modification of the transferring member 8, which is more detailed described with reference to Figs. 6 and 7. A tubular member 13 is arranged in said member in a through hole extending in the direction of movement from the position shown in Fig. 2 to the position shown in Fig. 3. Furthermore, a spring means 14, in the shown embodiment in the shape of a helical spring, is arranged extending between a downwardly directed edge portion at the aperture 15, into which the lower end portion of the control member 7 extends, and the bottom portion of a non-through hole in the tubular member 13. The portion of the tubular member 13 directed towards the aperture 15 is arranged as a collar-shaped member having a larger diameter, and thus prevents that the tubular member 13 is moved further out from the transferring member 8 in relation to the position shown in Figs. 6 and 7. The free length of the tubular member 13 past the outside diameter of the transferring member 8 is arranged smaller than the distance existing between the internal wall of the housing 11 and the outside diameter of the transferring member 8 when the valve unit is in a closed position (Fig. 2). Should, for example, the latter distance be 5 mm and the tubular member 13 arranged having a free length of 2,5 mm, this would result in the possibility of an initial opening movement of 2,5 mm for the transferring member 8, and thereto attached movable ceramic valve disc 9, before the outer end portion of the tubular member 13 takes up contact with the internal wall surface of the housing 11. Such a position is illustrated in Fig. 4. During a further opening movement, the contact with the internal wall surface of the housing 11 results in a displacement of the tubular member 13 towards the aperture 15, whereby the spring means 14 exerts a pressure acting to return the tubular member back to the original extending position (Fig. 5). When thus manually applied force against the control member 2 is interrupted, e.g. when a maximum discharged flow has been accomplished (according to Fig. 5), the tubular member 13 is moved by the influence from the spring means 14 back to its extending position (according to Fig. 4), which in described example results in a reduction of the discharged flow by 50%.

It should be understood that accomplished flow reduction can be varied as desired by a suitable choice of free length for the tubular member 13 in relation to the maximum distance of travel for the transferring member 8. For example, when the latter distance of movement is 6 mm, and the tubular member is allowed a maximum extending length of 4 mm, the movable ceramic disc 9 automatically returns to a position corresponding to one third of fully open position when manual influence applied to the valve unit 1 is interrupted.

In the embodiment shown and described, the spring means 14 comprises of a helical spring, partly surrounded by a dead end hole taken up in the tubular member 13. Also other solutions can obviously be used which result in a substantially analogue function. The spring means 14 may thus be a suitably designed blade spring means, in which case the tubular member 13 can be arranged as a solid pin-shaped member. In such an embodiment, the spring means 14 may also be arranged attached to the pin-shaped member in a suitable fashion, and thus act as a means which restricts the free length of the pin-shaped member extending from the transferring member 8.

Furthermore, the tubular member 13 of Figs. 4 - 7 may also be arranged as a solid pin, i.e. without any dead end hole for utilized helical spring 14. By extending shown tubular member from the collar shaped abutment member by means of a smaller stud-shaped part, which can be surrounded by the helical spring 14, shown dead end hole is no longer required. However, the disadvantage of such a solution is the shorter length obtained for utilized helical spring 14.

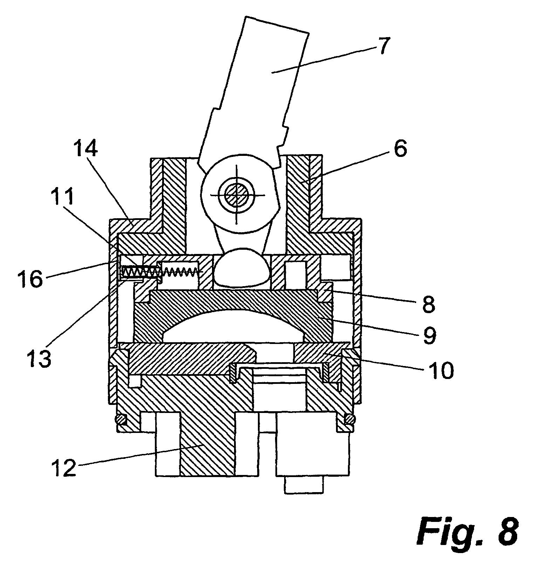

A further modified embodiment is shown in Fig. 8, which substantially corresponds to previously shown and described embodiment, e.g. as shown in Fig. 4. However, a substantial difference is that the upper member 6 in this modified embodiment is arranged having a preferably surrounding downwardly directed collar-shaped member 16, the internal surface of which the tubular member 13 takes up contact with its outer end portion. An advantage of this modified embodiment is, that during a rotary movement intended to increase or decrease the temperature of the discharged flow, said contact surface and tubular member 13 perform a rotary movement of identical size, and the outer end portion of the tubular member 13 thus maintains a stationary position in relation to the collar shaped member 16. According to previously described embodiment, e.g. as shown in Fig. 4, such a temperature controlling movement results in that the outer end portion of the tubular member 13 is moved along the internal wall surface of the stationary tubular housing 11, which results in certain amount of friction and wear. This is completely avoided by the modified embodiment shown in Fig. 8.

In this connection should be pointed out, that even though it can be motivated from manufacturing point of view to arrange the downwardly directed collar-shaped member 16 as a surrounding member, only a downwardly directed member having a restricted surrounding extension is in fact required, i.e. only located adjacent to the tubular member 13. As a further modification should also be mentioned the possibility to dispose of the tubular member 13 in the embodiment shown in Fig. 8, i.e. to use the spring means 14 without any surrounding tubular member 13.

The above mentioned examples of modifications of shown embodiments are only intended to show substantially equivalent solutions within the scope of the inventive thought and the following claims, and to emphasize that the invention is in no way restricted to shown and described example of an embodiment.

## Claims

1. Mixing valve of single lever type for liquids, e.g. hot and cold water, and of the type comprising a valve housing (3), arranged with two individual inlets (5) and a common outlet (4) for the liquids, a manually operable control member (2) arranged to influence a valve unit (1) arranged in the valve housing (3), preferably of ceramic type and having a fixed valve disc (10) and a in relation to same rotatably and linearly movably arranged valve disc (9), whereby both temperature and flow volume of discharged flow can be controlled, **characterised in, that** a movement transferring member (8) joined with the movably arranged valve disc (9) is arranged with a springloaded abutment means (13) extending in the direction of a flow increasing movement of said valve disc (9), after a predetermined linear flow increasing movement said means (13) being arranged to take up contact with the internal surface of a surrounding tubular housing (11) or an extending contact member (16) of a central member (6), and during a continued flow increasing opening movement means (13) being arranged to exert a force aiming to return the movably arranged valve disc (9) to a position in which the springloaded abutment means (13) no longer exerts any return force due to contact with the tubular housing (11), or with the extending contact member (16).

2. Mixing valve according to claim 1, **characterised in, that** the abutment means (13) comprises of a substantially tubular member with the end portion extending from the movement transferring member (8) being substantially closed, and that a spring means (14), preferably a helical spring, is arranged partly surrounded by said tubular member (13) and extending to a contact position against a wall portion of an aperture in the transferring member (8) and coacting with the control member (2).

3. Mixing valve according to claim 1, **characterised in, that** the abutment means (13) comprises of a substantially solid pin-shaped member extending through and out from the movement transferring member (8), coacting with a spring means (14) and arranged surrounded by said movement transferring member (8) to exert a force arranged to maintain said abutment means (13) in a partly from the movement transferring member (8) extending position.

4. Mixing valve according to any one of claims 1 - 3, **characterised in, that** the springloaded abutment means (13) is arranged having a maximum protruding extension from the movement transferring member (8) being smaller than the distance between said member (8) and surrounding tubular housing (11) when the valve discs (9, 10) take up a relative position in which water throughflow is prohibited.

5. Mixing valve according to any one of claims 1 - 4, **characterised in, that** the springloaded abutment member (13) is arranged having a movement restricting member, e.g. a surrounding collar-shaped member having a diameter exceeding the portion extending through the movement transferring member (8), said member restricting the movement of the springloaded abutment means (13) in direction towards the surrounding tubular housing (11).

6. Mixing valve according to any one of claims 1 - 5, **characterised in, that** the portion of a flow increasing opening operation that can be performed without automatic return to a reduced flow substantially corresponds to the relationship existing between maximum linear movement of the movement transferring means (8) and the maximum distance as the spring loaded abutment means (13) can protrude from said means (8).

7. Mixing valve according to any one of claims 1 - 6, **characterised in, that** the spring means (14) completely or partly consists of a blade spring means, arranged to impose a force arranged to attempt to maintain the springloaded abutment means (13) in a partly protruding position from the movement transferring means.

8. Mixing valve according to any one of claims 1 - 7, **characterised in, that** the end portion of the spring loaded abutment means (13) surrounded by the movement transferring means (8) is arranged with a preferably collar-shaped contact means having a diameter exceeding the diameter of the part of the abutment means (13) extending through the wall portion of the movement transferring means (8), and having an internal preferably stud-shaped end portion with a diameter smaller than said contact means.

9. Mixing valve according to any one of claims 1 - 8, **characterised in, that** the springloaded abutment means only comprises of a force imposing helical spring means, i.e. without a partly surrounding abutment means (13).

## Patentansprüche

1. Ein Mischventil vom Einzelhebeltyp für Flüssigkeiten, z. B. heißes und kaltes Wasser, und von dem Typ, der ein Ventilgehäuse (3), das mit zwei individuellen Einlässen (5) und einem gemeinsamen Auslass (4) für die Flüssigkeiten angeordnet ist, ein manuell betreibbares Steuerungsbauglied (2), das angeordnet ist, um eine Ventileinheit (1) zu beeinflussen, die in dem Ventilgehäuse (3) angeordnet ist, vorzugsweise von einem Keramiktyp, und eine feste Ventilscheibe (10) und eine Ventilscheibe (9) aufweist, die im Hinblick auf dieselbe drehbar und linear bewegbar angeordnet ist, wodurch sowohl die Temperatur als auch das Flussvolumen des entlassenen Flusses gesteuert werden können, **dadurch gekennzeichnet, dass** ein Bewegungsübertragungsbauglied (8) verbunden mit der bewegbar angeordneten Ventilscheibe (9) mit einer federbelasteten Anstoßeinrichtung (13) angeordnet ist, die sich in der Richtung einer den Fluss erhöhenden Bewegung der Ventilscheibe (9) erstreckt, wobei, nach einer vorbestimmten, linearen den Fluss erhöhenden Bewegung die Einrichtung (13) angeordnet ist, um Kontakt mit der internen Oberfläche eines Umfangsröhrengehäuses (11) oder eines sich erstreckenden Kontaktbauglieds (16) eines Mittelbauglieds aufzunehmen, und wobei während einer kontinuierlichen den Fluss erhöhenden Öffnungsbewegung die Einrichtung (13) angeordnet ist, um eine Kraft auszuüben, die darauf abzielt, die bewegbar angeordnete Ventilscheibe (9) in eine Position zurückzubringen, in der die federbelastete Anstoßeinrichtung (13) keine Gegenkraft mehr ausübt, aufgrund eines Kontakts mit dem Röhrengehäuse (11) oder mit dem sich erstreckenden Kontaktbauglied (16).

2. Mischventil gemäß Anspruch 1, **dadurch gekennzeichnet, dass** die Anstoßeinrichtung (13) aus einem im wesentlichen röhrenförmigen Bauglied besteht, dessen Endabschnitt, der sich von dem Bewegungsübertragungsbauglied (8) erstreckt, im Wesentlichen geschlossen ist, und dass ein Federbauglied (14), vorzugsweise eine Schraubenfeder, derart angeordnet ist, dass sie teilweise von dem röhrenförmigen Bauglied (13) umgeben ist und sich zu einer Kontaktposition gegen einen Wandabschnitt einer Öffnung in dem Übertragungsbauglied (8) erstreckt und mit dem Steuerungsbauglied (2) zusammenarbeitet.

3. Mischventil gemäß Anspruch 1, **dadurch gekennzeichnet, dass** die Anstoßeinrichtung (13) aus einem im Wesentlichen durchgehenden stiftförmigen Bauglied besteht, das sich durch das und aus dem Bewegungsübertragungsbauglied (8) erstreckt, das mit einer Federeinrichtung (14) zusammenarbeitet und umgeben von dem Bewegungsübertragungsbauglied (8) angeordnet ist, um eine Kraft auszuüben, die vorgesehen ist, um die Anstoßeinrichtung (13) in einer Position beizubehalten, die sich teilweise von dem Bewegungsübertragungsbauglied (8) erstreckt.

4. Mischventil gemäß einem der Ansprüche 1 bis 3, **dadurch gekennzeichnet, dass** die federbelastete Anstoßeinrichtung (13) derart angeordnet ist, dass sie eine maximale hervorstehende Erweiterung von dem Bewegungsübertragungsbauglied (8) aufweist, die kleiner ist als die Distanz zwischen dem Bauglied (8) und dem Umgebungsröhrengehäuse (11), wenn die Ventilscheiben (9, 10) eine relative Position einnehmen, in der ein Wasserdurchfluss verhindert wird.

5. Mischventil gemäß einem der Ansprüche 1 bis 4, **dadurch gekennzeichnet, dass** das federbelastete Anstoßbauglied (13) derart angeordnet ist, dass es ein Bewegungseinschränkungsbauglied aufweist, z. B. ein umgebendes manschettenförmiges Bauglied mit einem Durchmesser, der den Abschnitt überschreitet, der sich durch das Bewegungsübertragungsbauglied (8) erstreckt, wobei das Bauglied die Bewegung der federbelasteten Anstoßeinrichtung (13) in einer Richtung hin zu dem umgebenden Röhrengehäuse (11) einschränkt.

6. Mischventil gemäß einem der Ansprüche 1 bis 5, **dadurch gekennzeichnet, dass** der Abschnitt einer flussverstärkenden Öffnungsoperation, die ohne automatische Rückkehr zu einem reduzierten Fluss durchgeführt werden kann, im Wesentlichen der Beziehung entspricht, die zwischen der maximalen linearen Bewegung der Bewegungsübertragungseinrichtung (8) und der maximalen Distanz besteht, wenn die federbelastete Anstoßeinrichtung (13) von der Einrichtung (8) hervortreten kann.

7. Mischventil gemäß einem der Ansprüche 1 bis 6, **dadurch gekennzeichnet, dass** die Federeinrichtung (14) vollständig oder teilweise aus einer Blattfedereinrichtung besteht, die angeordnet ist, um eine Kraft auszuüben, die vorgesehen ist, um zu versuchen, die federbelastete Anstoßeinrichtung (13) in einer teilweise hervorstehenden Position von der Bewegungsübertragungseinrichtung beizubehalten.

8. Mischventil gemäß einem der Ansprüche 1 bis 7, **dadurch gekennzeichnet, dass** der Endabschnitt der federbelasteten Anstoßeinrichtung (13), umgeben von der Bewegungsübertragungseinrichtung (8), mit einer vorzugsweise manschettenförmigen Kontakteinrichtung angeordnet ist, die einen Durchmesser aufweist, der den Durchmesser des Teils der Anstoßeinrichtung (13) überschreitet, der sich durch den Wandabschnitt der Bewegungsübertragungseinrichtung (8) erstreckt, und einen internen vorzugsweise stiftförmigen Endabschnitt mit einem Durchmesser aufweist, der kleiner ist als die Kontakteinrichtung.

9. Mischventil gemäß einem der Ansprüche 1 bis 8, **dadurch gekennzeichnet, dass** die federbelastete Anstoßeinrichtung nur aus einer Kraft ausübenden Schraubenfedereinrichtung besteht, d. h. ohne eine dieselbe teilweise umgebende Anstoßeinrichtung (13).

## Revendications

1. Robinet mélangeur à levier unique pour liquides, par exemple de l'eau chaude et froide, et du type comprenant un logement de robinet (3), présentant deux entrées individuelles (5) et une sortie commune (4) pour les liquides, un élément de commande pouvant fonctionner manuellement (2) agencé pour influencer une unité de robinet (1) disposée dans le logement de robinet (3), de préférence de type céramique et ayant un disque de robinet fixe (10) et un disque de robinet (9) agencé de façon à bouger de manière rotative et linéaire par rapport à ce dernier, moyennant quoi la température et le volume du débit déchargé peuvent être commandés, **caractérisé en ce qu'**un élément de transfert de mouvement (8) relié au disque de robinet agencé de façon mobile (9) présente un moyen d'appui sur ressort (13) s'étendant dans la direction d'un mouvement d'accroissement de débit dudit disque de robinet (9), après un mouvement d'accroissement de débit linéaire prédéterminé ledit moyen (13) étant agencé pour retourner en contact avec la surface interne d'un logement tubulaire environnant (11) ou un élément de contact extensible (16) d'un élément central (6), et pendant un mouvement d'ouverture d'accroissement de débit permanent le moyen (13) étant agencé pour exercer une force visant à ramener le disque de robinet agencé de façon mobile (9) à une position dans laquelle le moyen d'appui sur ressort (13) n'exerce plus de force de retour en raison du contact avec le logement tubulaire (11) ou l'élément de contact extensible (16).

2. Robinet mélangeur selon la revendication 1, **caractérisé en ce que** le moyen d'appui (13) se compose d'un élément sensiblement tubulaire dont la partie d'extrémité s'étend de l'élément de transfert de mouvement (8) sensiblement fermé, et **en ce qu'**un moyen de ressort (14), de préférence un ressort hélicoïdal, est agencé partiellement entouré par ledit élément tubulaire (13) et s'étendant jusqu'à une position de contact contre une partie de paroi d'une ouverture dans l'élément de transfert (8) et coopérant avec l'élément de commande (2).

3. Robinet mélangeur selon la revendication 1, **caractérisé en ce que** le moyen d'appui (13) se compose d'un élément en forme de cheville sensiblement solide s'étendant à travers et hors de l'élément de transfert de mouvement (8), coopérant avec un moyen de ressort (14) et agencé entouré par ledit élément de transfert de mouvement (8) pour exercer une force agencée pour maintenir ledit moyen d'appui (13) dans une position s'étendant en partie de l'élément de transfert de mouvement (8).

4. Robinet mélangeur selon l'une quelconque des revendications 1 à 3, **caractérisé en ce que** le moyen d'appui sur ressort (13) est agencé ayant une extension vers l'avant maximale depuis l'élément de transfert de mouvement (8) inférieure à la distance entre ledit élément (8) et le logement tubulaire environnant (11) lorsque les disques de robinet (9, 10) reprennent une position relative dans laquelle l'écoulement d'eau est empêché.

5. Robinet mélangeur selon l'une quelconque des revendications 1 à 4, **caractérisé en ce que** l'élément d'appui sur ressort (13) est agencé ayant un élément de limite de mouvement, par exemple, un élément en forme de collier environnant ayant un diamètre dépassant la partie s'étendant à travers l'élément de transfert de mouvement (8), ledit élément limitant le mouvement du moyen d'appui sur ressort (13) en direction du logement tubulaire environnant (11).

6. Robinet mélangeur selon l'une quelconque des revendications 1 à 5, **caractérisé en ce que** la partie d'une opération d'ouverture d'accroissement de débit qui peut être effectuée sans retour automatique à un débit réduit correspond sensiblement à la relation existant entre le mouvement linéaire maximum du moyen de transfert de mouvement (8) et la distance maximale dont le moyen d'appui sur ressort (13) peut dépasser dudit moyen (8).

7. Robinet mélangeur selon l'une quelconque des revendications 1 à 6, **caractérisé en ce que** le moyen de ressort (14) est constitué complètement ou partiellement d'un moyen de ressort à lame, agencé pour imposer une force adaptée pour essayer de maintenir le moyen d'appui sur ressort (13) dans une position dépassant partiellement le moyen de transfert de mouvement.

8. Robinet mélangeur selon l'une quelconque des revendications 1 à 7, **caractérisé en ce que** la partie d'extrémité du moyen d'appui sur ressort (13) entouré par le moyen de transfert de mouvement (8) présente un moyen de contact de préférence en forme de collier ayant un diamètre dépassant le diamètre de la partie du moyen d'appui (13) s'étendant à travers la partie de paroi du moyen de transfert de mouvement (8), et ayant une partie d'extrémité interne de préférence en forme de goujon d'un diamètre inférieur audit moyen de contact.

9. Robinet mélangeur selon l'une quelconque des revendications 1 à 8, **caractérisé en ce que** le moyen d'appui sur ressort se compose seulement d'un moyen de ressort hélicoïdal imposant une force, c'est-à-dire sans moyen d'appui partiellement environnant (13).
